Europäisches Patentamt

European Patent Office

Office européen des brevets

(11) Publication number: **0 414 451 A1**

# EUROPEAN PATENT APPLICATION

(21) Application number: 90309046.2

(22) Date of filing: 17.08.90

(51) Int. Cl.⁵: **B65D 81/24**, A23B 7/148, B65B 25/04

(30) Priority: 23.08.89 US 398007

(43) Date of publication of application:
27.02.91 Bulletin 91/09

(84) Designated Contracting States:
DE FR GB IT

(71) Applicant: TRANSFRESH CORPORATION
607 Brunken Avenue
Salinas California 93902(US)

(72) Inventor: Bell, Laurence D
12440 Saddle Way
Carmel Valley California 93924(US)

(74) Representative: Marlow, Nicholas Simon et al
Reddie & Grose 16, Theobalds Road
London WC1X 8PL(GB)

(54) **Package for perishable fruits and vegetables.**

(57) A package for perishable respiring fruits or vegetables or a combination of respiring fruits and vegetables includes a substantially rigid, substantially inflexible container adapted to hold the perishable; a substantially rigid, substantially inflexible cover for the container which, when placed on the container, forms package permeable to gaseous oxygen and to gaseous carbon dioxide; oxygen-permeable and carbon dioxide-permeable flexible packaging film surrounding the container and its cover; and within the packaging film, an equilibrium gaseous atmosphere dictated by an atmosphere quotient or range of quotients sufficient to optimize and sustain the shelf life of the perishables inside the package for a time period of at least about three days.

EP 0 414 451 A1

# PACKAGE FOR PERISHABLE FRUITS AND VEGETABLES

This invention relates to a package for persishable respiring fruits and vegetables such as lettuce, cabbage, carrots and apples. The package includes a substantially rigid, substantially inflexible container means, preferably made of a thermoset or thermoplastic material. The container means preferably has a bottom panel and four wall members joined to, and projecting upwardly from this bottom panel. The container means is generally adapted to hold a desired quantity, by weight or volume, of the perishable respiring fruits or vegetables.

The package also preferably includes a substantially rigid, substantially inflexible cover means for the container means. When the container means and cover means are joined together, the resulting package is permeable to oxygen and carbon dioxide.

The package further includes flexible packaging film means for surrounding and sealing the container means and cover means inside the packaging film. The packaging film itself is also permeable to oxygen and carbon dioxide, and can be sealed to prevent uncontrolled flow of oxygen and carbon dioxide into or out of the film means.

Sealed within the packaging film means is a gaseous atmosphere having an atmosphere quotient sufficient to sustain the shelf life of the respiring perishable fruits or vegetables inside the package at an optimum quality, taking into account freshness, color, taste and texture of the fruit or vegetable for a period of at least about 3 days, and preferably at least about 7 to 10 days.

In preferred embodiments, the gaseous atmosphere inside the package has an atmosphere quotient that provides optimum shelf life for the perishable inside the package for a period of 3, 5, 10 or even 14 days at temperatures in the range of about 32° F. to about 50° F. The methods for determining a proper atmosphere quotient are disclosed in copending U. S. Patent Application Serial No. 07/238,962, filed August 26, 1988, entitled, "Method for Packaging Perishables." These methods generally call for optimizing the shelf life of respiring perishable fruits or vegetables in a package made of a packaging material that transmits and/or is permeable to oxygen and carbon dioxide comprising the following steps:

(1) determining the respiration rate (R) of said perishable fruit or vegetable;

(2) selecting a packaging material for said respiring perishable that has known or ascertainable transmissibility to oxygen and carbon dioxide;

(3) preparing a first plurality of packages, each package containing said perishable fruit or vegetable in said packaging material, and each of said plurality of packages having a different permeant factor (G) and different atmosphere quotient value (AQ) from the other packages in said first plurality, where G is equal to: the area (A) of said packaging material required to enclose a given weight of said perishable fruit or vegetable in a gaseous atmosphere that includes oxygen, multiplied by the permeability (P) of said packaging material to carbon dioxide or oxygen, and divided by the weight (W) of said perishable fruit or vegetable to be enclosed in said package, and AQ is equal to G divided by R;

(4) subjecting each of said packages containing said perishable fruit or vegetable to a given, known temperature and pressure over a known period of time; observing the quality, appearance and marketability of said respiring perishable fruit or vegetable in each of said packages; and, based on these observations, determine which of said packages has optimum shelf life;

(5) repeating, as necessary, steps (3) and (4) with at least one additional plurality of packages, each of said additional packages having permeant factors different from the packages in said first plurality and different from the other packages in said additional plurality until an AQ value representing optimum shelf life for said perishable fruit or vegetable has been determined;

(6) from the atmosphere quotient values determined in steps (3), (4) and (5), deriving the equivalent permeant factors G in accordance with the formula AQ equals G divided by R; and

(7) using said equivalent G values, preparing an optimum package for said perishable fruit or vegetable from said packaging material by varying one or more of the variables A, P and/or W while maintaining said equivalent G value to achieve and maintain the optimum atmosphere shelf life for said perishable fruit or vegetable in said optimum package.

In preferred embodiments, the methods of this invention may also include the step of determining the oxygen and carbon dioxide quotients independent of one another so that the ratio of carbon dioxide-to-oxygen permeabilities for a given package of a perishable can be optimized. The ratio of carbon dioxide-to-oxygen permeabilities for a given package of a given perishable directly influences the equilibrium ratio of carbon dioxide-to-oxygen concentrations inside the package. At equilibrium, the amount of oxygen permeating into the package is substantially equal to the oxygen consumed by the perishable inside the package, and the amount of carbon dioxide permeating out of the package is substantially equal to the carbon dioxide produced inside the package. Thus, once an optimum carbon dioxide or oxygen quotient is determined as in step (4) above with a packaging material of a given carbon dioxide-to-oxygen permeability ratio, then changing to a material of different carbon dioxide-to-oxygen permeability ratio may require a new atmosphere quotient determination.

An atmosphere quotient value determined in accordance with these methods can differ, for a given respiring perishable in a given packaging material, with the initial void volume per unit weight of perishable within the package, the equilibrium void volume and composition per unit weight of perishable within the package, or both. Accordingly, the new methods also require redetermining atmosphere quotient values if the initial or the equilibrium void volume within a given package changes.

In preferred embodiments, the permeability of the packaging film is measured in cubic centimeters of gas such as oxygen or carbon dioxide transmitted through 100 square inches of packaging for 24 hours at 72° F., and less than 50% relative humidity (RH). The area of film is preferably measured in 100 square inches, and the weight of packaged perishable in grams, kilograms or pounds.

In preferred embodiments, the method for determining the respiration rate of a perishable product such as cauliflower comprises the following steps:

(1) placing duplicate, equal-weight samples of the perishable in dessicators that have been cooled to a known temperature above the freezing point of water and below 50° F., say 45° F.;

(2) sealing the dessicators, and connecting each dessicator to a continuous, controlled stream of filtered, humidified air, flowing at a nominal rate such that the percentage by volume of $CO_2$ in the outflow gas stream is consistent and nominally less than 0.5%;

(3) maintaining the flow of filtered, saturated air to the dessicators for 24 hours while maintaining the dessicators at a fixed temperature, say, 45° F., and then collecting a small sample, say 10 milliliters, of the gases flowing from the dessicators;

(4) measuring the percent by volume of carbon dioxide or of oxygen in the gas flowing from the dessicators using gas chromatography precalibrated as necessary, or another analytical method; and

(5) measuring the actual rate of air flow to the dessicators using, for example, the graduated cylinder/volume displacement method.

The respiration rate of the perishable in milligrams of carbon dioxide per kilogram-hours can then be calculated in accordance with the following formula: milligrams of carbon dioxide per kilogram-hour is equal to the volume of carbon dioxide in the gas outflow from a dessicator, measured in milliliters per minute, multiplied by 60 minutes, divided by the sample weight of the perishable in a dessicator, measured in kilograms, and multiplied by the factor 1.964 milligrams, where the factor 1.964 milligrams equals the gram weight of one milliliter of carbon dioxide, or

$$mg\ CO_2/kg\text{-}hr = \frac{(volume\ CO_2\ ml/min)(1.964\ mg)\ (60\ min)}{weight\ of\ perishable\ in\ kilograms}$$

In preferred embodiments, the method for determining film permeability comprises the following steps:
(1) placing an 8 inch diameter sample of the packaging film, free of manufacturing defects and mechanical abrasions, between two 7-inch, 550 milliliter containers that are sealed to prevent inflow or outflow of gas, as by use of an O-ring and clamp;

(2) directing a flow of gas whose film permeability is to be tested, such as oxygen or carbon dioxide, into one of the two containers, through inlet and outlet valves, at a predetermined rate, say one liter per minute, while flushing the other container with nitrogen;

(3) maintaining gas flow to each container as in step (2) until one container contains 99% or more of the gas whose film permeability is to be tested, namely oxygen or carbon dioxide, and the other container contains 0.02% or less of the test gas;

(4) shutting off the valves and recording the time and temperature;

(5) waiting until sufficient test gas has diffused through the film into the second chamber to raise the concentration of the test gas in the second chamber to a value in the range of 1.0% to 1.5% by volume;

(6) extracting a small, say 10 milliliter gas sample from the second chamber and measuring the percentage of test gas in the sample as, for example, by gas chromatography, and recording the time and temperature of sample collection; and

(7) calculating the gas transmission rate in terms of volume of gas diffusing through the film per unit area of the film within a specific time interval in accordance with the following formula: permeability equals volume of the second container multiplied by the area of the film and by the percentage of test gas found in the second container minus the amount of test gas in the second container before diffusion began and divided by the diffusion time and by the factor 100. The permeability so determined is expressed in units of cubic centimeters of gas per 100 square inches of film diffusing through it over a 24-hour period at 72° F. In mathematical terms, the formula is as follows:

```
Permeability =

(volume of second chamber)(net percent of permeant
gas diffused)(area of film)(24 hours)
              (100)(diffusion time)
```

In preferred embodiments, the permeant factor can be adjusted or varied by changing film permeability, i.e., film thickness or film composition. The package dimensions can be varied by increasing or decreasing the surface area of packaging. The package weight can be varied by simply increasing or decreasing the weight of perishable enclosed within a given package.

In preferred embodiments, atmosphere quotient as a measure of marketability of a perishable is determined by assigning arbitrary atmosphere quotient values to a plurality of packaged samples of the perishable. Each package should be made of the name packaging material, have the same package area, the same internal void volume per unit weight of perishable in the package, and the same packaging material permeability. To achieve the assigned quotient values, such packages can have differing, known weights of perishable enclosed in them. Finally, the effect of such variations in atmosphere quotient upon marketability of the perishable are determined. In such determinations, flexible packaging material is preferably used, with the permeability and surface area of the package held constant, to facilitate maintaining the internal void volume and composition per unit weight packaged substantially the same for all samples.

Marketability can be evaluated by storing each of the packaged perishable samples at a given temperature, say, 45° F., for a period of time, say 20 days or more, but preferably not more than about 10 or 15 days, followed by subjective evaluations of each sample for freshness of appearance, taste and/or other sensory attributes indicative of marketability. Objective indices of marketability are derived from analyses of such variables as microbiological content, pigmentation, carbohydrate content, and fermentation products such as ethanol and acetaldehyde. In this way, a first series of atmosphere quotient values that correlate with subjective and objective marketability indices of the perishable can be developed. For nearly all respiring perishables, the correlation between atmosphere quotient and marketability is curvilinear. Below and above the optimum values on this curve, marketability of the perishable declines. For each of the subjective and objective indicia, linear correlations, either positive or negative, with the atmosphere quotient values can be observed and plotted.

Thereafter, further series of such correlations can be obtained by varying the permeability of the packaging film while holding all other variables the same, or by varying the area of the package while holding all other variables the same. From these series of tests, a range of atmosphere quotients that correlate most closely with marketability of the perishable can be developed.

Thereafter, the range of atmosphere quotient values so developed can be used to determine the corresponding range of permeant factor values in accordance with the formula Q equals G divided by R, where Q is atmosphere quotient, G is permeant factor, and R is the respiration rate of the perishable. Utilizing the range of permeant factors so determined, the area of the package, the permeability of the packaging film, and the weight of perishable packaged can be optimized by appropriate adjustments of one or more of these variables in accordance with the following formula: G equals AP divided by W, where G equals permeant factor; A is the area of the packaging film, preferably measured in 100 square inches; P is the permeability of the packaging film per 100 square inches of film; and W is the weight, measured in pounds, of perishable enclosed in the package.

Permeant factor should be adjusted to accommodate varying respiration rates between two or more batches of respiring perishable of the same kind to maintain the atmosphere quotient within the optimum range. Because respiration rate can vary widely from one batch of a given respiring perishable to another batch, the respiration rate should be measured for each new batch of perishable of the same kind. Batches can vary from one another in variety, source, maturity, or some combination of these. Moreover, the initial and the equilibrium void volume and composition in each package per unit weight of perishable should be substantially the same regardless of package size and regardless of the weight of perishable within the package.

Where the nature of the packaging material precludes maintaining the initial or the equilibrium void volume and composition per unit weight of perishable within each package substantially the same as the values determined without taking account of changes in these values, atmosphere quotient may need to be redetermined with each change in these values. These void volume problems arise most often with rigid packaging material. For example, as equilibrium void volume and composition inside a rigid package increase, the time to reach an equilibrium atmosphere increases. With flexible or rigid packages, the initial void volume and composition in a package per unit weight of perishable can be held constant by adjusting the area of material in the packages. Variations in the time needed to reach an equilibrium atmosphere can have significant effects on quality apart from the equilibrium atmosphere.

After determining the atmosphere quotient for a given perishable in a given package, and after redetermining atmosphere quotient, as necessary, to allow for changes in initial and equilibrium void volume and composition, the benefits of atmosphere modification can be more easily determined. Where the initial void volume in a package is small, it may be necessary to add oxygen or nitrogen to the package before sealing to attain the desired initial oxygen concentration. Further, where the initial void volume in the package contains a gas other than air alone, allowances must be made for changes in internal void space resulting from respiration of the perishable in the package and from permeability of the packaging material. For example, most flexible packages will become smaller in direct proportion to the initial oxygen concentration in the initial void volume where a perishable inside the package consumes oxygen faster than oxygen enters the package, by permeability or otherwise, or where the packaging material allows the $CO_2$ produced to permeate out of the package faster than the $O_2$ permeates into the package.

Thus, increases in initial oxygen concentration in flexible packages will cause decreases in equilibrium void space.

To control the oxygen inside this package, in preferred embodiments, the initial void volume of the inflexible container means with its cover means in place can be made a predetermined, desired size. Alternatively, the package can be evacuated before sealing, and then filled with a desired, modified atmosphere having desired amounts of oxygen, nitrogen and, optionally, carbon monoxide. In other alternatives, oxygen scavengers can be placed inside the package. Such scavengers include iron-based oxygen scavengers, such as ferrous oxide, or vegetable scavengers such as broccoli. In a rigid package containing an iceberg lettuce salad with multiple respiring ingredients, the void volume of air contains too much oxygen,per pound of product such that the lettuce may discolor before the equilibrium atmosphere, dictated by the atmosphere quotient, is achieved. By adding an ingredient with a much greater respiration rate than lettuce,such as carrots or broccoli, we can increase the rate of oxygen consumption and thereby reduce the time to equilibrium, adjusting the atmosphere quotients accordingly.

## Claims

1. A package for a perishable, respiring fruit or vegetable or a combination thereof comprising:
a substantially rigid, substantially inflexible, thermoset or thermoplastic container adapted to hold a perishable, respiring fruit or vegetable;
a substantially rigid, substantially inflexible cover for the container, the container and the cover, when joined together, being permeable to oxygen and to carbon dioxide;
a flexible packaging film surrounding the container and the cover, the film being permeable to oxygen and carbon dioxide and being sealed to prevent uncontrolled flow of oxygen and carbon dioxide into, or out of, the package;
an equilibrium gaseous atmosphere within the packaging film dictated by an atmosphere quotient or range of quotients sufficient to optimize and sustain the shelf life of a respiring perishable fruit or vegetable inside the package for at least about three days.

2. A package according to claim 1 in which the container and the cover are of polystyrene.

3. A package according to claim 1 or 2 in which the package initially includes a predetermined, desired, oxygen concentration in excess of or less than the concentration in air.

4. A package according to any preceding claim in which the initial volume and oxygen concentration in the package is sufficiently small to avoid discoloration or deterioration of a respiring fruit or vegetable during the shelf life of the package.

5. A package according to any preceding claim further comprising a predetermined, desired, modified atmosphere in the package.

6. A package according to any preceding claim in which the atmosphere in the package includes carbon monoxide in an amount sufficient to minimize discoloration of a respiring fruit or vegetable.

7. A package according to any preceding claim further comprising oxygen scavengers inside the package in an amount sufficient to reduce the initial oxygen concentration and to reduce the respiration rate of a perishable fruit or vegetable.

8. A package according to claim 7 in which the oxygen scavenger is an iron-based substance or a vegetable having a high respiration rate.

9. A method for making a package for a perishable respiring fruit or vegetable comprising placing a respiring fruit or vegetable in a substantially rigid, substantially inflexible container adapted to hold the respiring perishable fruit or vegetable; placing a substantially rigid, substantially inflexible cover over the container, the container and the cover when joined together being permeable to oxygen or carbon dioxide; surrounding the cover and the container with the respiring fruit or vegetable inside with flexible packaging film which transmits oxygen and carbon dioxide; sealing the packaging film to prevent uncontrolled flow of oxygen and carbon dioxide into or out of the package.

10. A method according to claim 9 further comprising sealing within the packaging film an initial gaseous atmosphere or oxygen scavenger which combined with the equilibrium atmosphere dictated by atmosphere quotient sustains shelf life of the respiring perishable fruit or vegetable inside the package for a period of at least about three days.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | EP-A-0223567 (BUNZL FLEXPACK)<br>* column 1, lines 40 - 45 *<br>* column 2, lines 12 - 32 *<br>* column 4, lines 16 - 23; figure 1 *<br>--- | 1, 9 | B65D81/24<br>A23B7/148<br>B65B25/04 |
| A | EP-A-0270764 (HERCULES)<br>* page 8, lines 9 - 11 *<br>* page 9, lines 20 - 34 *<br>* page 13, lines 20 - 21 *<br>* page 13, lines 30 - 33 *<br>* page 14, lines 25 - 27 *<br>* page 14, lines 29 - 30 *<br>* page 15, lines 30 - 31 *<br>* page 15, line 36 - page 6, line 2 *<br>* claim 1; figures 1, 4, 6 *<br>--- | 1, 2 | |
| A | US-A-3450543 (BADRAN ET AL.)<br>* column 1, line 72 - column 3, line 8 *<br>* column 7, lines 42 - 47 *<br>--- | 1, 3-6, 9, 10 | |
| A | US-A-2571340 (CARSON)<br>* column 7, lines 60 - 65 *<br>* claim 1; figure 1 *<br>------ | 1, 2 | TECHNICAL FIELDS SEARCHED (Int. Cl.5 )<br><br>B65D<br>A23B<br>B65B |

The present search report has been drawn up for all claims

| Place of search | Date of completion of the search | Examiner |
|---|---|---|
| BERLIN | 30 NOVEMBER 1990 | SPETTEL, J.D.M.L. |